# EUROPÄISCHE PATENTSCHRIFT

(11) **EP 3 737 534 B1**
(45) Veröffentlichungstag und Bekanntmachung des Hinweises auf die Patenterteilung: **15.06.2022**
(21) Anmeldenummer: 19703004.2
(22) Anmeldetag: 07.01.2019
(51) Int. Cl.: B25B 23/14, B25B 23/142, B23P 19/06

(54) **DREHMOMENTWERKZEUG**
TORQUE TOOL
OUTIL DE COUPLE

(30) Priorität: 12.01.2018 DE 102018100664
(43) Veröffentlichungstag der Anmeldung: 18.11.2020
(73) Patentinhaber: STAHLWILLE Eduard Wille GmbH & Co. KG, 42349 Wuppertal (DE)
(72) Erfinder: JENKINS, Brad, Monrovia, CA, 91016 (US); SCHWAFERTZ, Rainer, 42899 Remscheid (DE)
(74) Vertreter: Willems, Volker
(86) Internationale Anmeldenummer: PCT/DE2019/100003
(87) Internationale Veröffentlichungsnummer: WO 2019/137578

(56) Entgegenhaltungen:
- EP-A1- 2 777 883
- DE-A1-102004 059 814
- FR-A1- 3 010 341
- FR-A1- 3 034 033
- US-A- 3 693 381
- US-A- 5 203 242
- US-A1- 2007 261 868
- US-B1- 7 458 297

## Beschreibung

### Technisches Gebiet

Die Erfindung betrifft ein Drehmomentwerkzeug zum Anziehen einer Schraube oder dgl., welches bei einem Solldrehmoment auslöst, enthaltend
a) einen Grundkörper mit einem Gehäuse, welche um eine gemeinsame Achse zur Übertragung des Drehmoments rotieren,
b) einen Antriebsschaft, welcher mit dem Gehäuse zur Übertragung eines Drehmoments fest verbunden ist,
c) einen Verbindungsbereich an dem Antriebsschaft, welcher mit einem Antrieb verbunden werden kann,
d) einen Adapter für ein Betätigungswerkzeug, welcher an dem Grundkörper vorgesehen ist und gemeinsam mit dem Gehäuse und dem Antriebsschaft zum Übertragen des Drehmoments rotiert,
e) Erfassungs- und Auswertemittel zum Erfassen und Auswerten des übertragenen Drehmoments,
f) einen Auslösemechanismus, welcher in dem Gehäuse angeordnet ist und bei Erreichen eines Solldrehmoments auslöst
g) der Adapter für das Betätigungswerkzeug drehbar in dem Gehäuse gelagert ist, wobei der Auslösemechanismus einen Verriegelungsmechanismus enthält, welcher den Adapter mit dem Gehäuse zur Übertragung des Drehmoments verbindet und beim Auslösen des Auslösemechanismus für einen Freilauf in dem Gehäuse entriegelt,
h) der Adapter eine radiale Bohrung mit wenigstens einem Verrieglungselement aufweist, wobei das Verrieglungselement mit Hilfe des elektrisch betriebenen Aktuators zum Verriegeln aus der Bohrung in eine Ausnehmung des Gehäuses geschoben wird und zum Entriegeln sich das Verrieglungselement in einen Ausweichraum bewegt.

### Beschreibung

Die Verschraubung ist die am häufigsten genutzte Verbindung im Maschinenbau. Solche Verbindungselemente können nur durch die Verwendung geeigneter Montagewerkzeuge wirksam werden. Zu den hierfür geeigneten Montagewerkzeugen zählen Drehmomentwerkzeuge, wie der Drehmomentschraubendreher.

Drehmomentwerkzeuge werden benötigt, um an einem Werkstück ein bestimmtes Drehmoment auszuüben. Als Drehmomentwerkzeuge sind beispielsweise Drehmomentschlüssel oder Drehmomentschraubendreher bekannt. Es gibt mechanische und elektronische Drehmomentwerkzeuge. Insbesondere gibt es anzeigende und auslösende Drehmomentwerkzeuge. Anzeigende Drehmomentwerkzeuge zeigen immer das jeweils aktuell anliegende Drehmoment an. Bei auslösenden Drehmomentwerkzeugen wird ein Solldrehmoment eingestellt. Sobald dieses Drehmoment beim Anziehen einer Verschraubung erreicht wird, signalisiert das Drehmomentwerkzeug das Erreichen des Solldrehmoments einem Nutzer. Dies kann beispielsweise durch ein hörbares Klicken oder fühlbares Knacken signalisiert werden.

Das bei der Verwendung handgeführter Werkzeuge zu übertragende Drehmoment ist hierbei sowohl von der physischen Konstitution des Benutzers als auch von dessen subjektivem Kraftempfinden abhängig. Drehmomentwerkzeuge werden eingesetzt, um eine Schraube mit einer hohen Vorspannkraft zu belasten, die im elastischen Bereich der Schraube liegt, oder auch, um die Schraube mit nur geringen Vorspannkräften zu belasten. Der Einsatz von neuen Konstruktionswerkstoffen wie z. B. Magnesium, Aluminium oder Kunststoff, vor allem für den Leichtbau in der Automobil- oder Flugzeugindustrie, lässt sowohl den Bedarf als auch die Anforderungen an die Drehmomentwerkzeuge ansteigen. Durch diese neuen Werkstoffe steigt nämlich die Zahl der empfindlichen Schraubverbindungen. Die geringere Zugfestigkeit dieser Leichtbau-Werkstoffe im Vergleich zu Stahlwerkstoffen würde bei einer

Überbeanspruchung der Schraubverbindung zu Beschädigungen des Gewindes führen, die diese teuren Bauteile unbrauchbar machen würden.

### Stand der Technik

Aus der DE 20 2007 015 971 U1 ist ein multifunktionales pneumatisches Werkzeug bekannt. Das multifunktionelle pneumatische Werkzeug umfasst einen Basiskörper, an dem ein Bedienungshebel, ein Einlassanschluss und ein Zylinder angeordnet sind. Im Inneren des Zylinders ist ein Rotor mit Schaufeln angeordnet. Der Zylinder ist durch einen Einlassschalter mit dem Einlassanschluss verbunden. Der Einlassschalter ist durch den Bedienungshebel steuerbar. Eine Drehwelle des Rotors ist dabei durch den Zylinder geführt. Das Werkzeug umfasst zusätzlich mindestens zwei Werkzeugköpfe mit unterschiedlichen Funktionen. Ein Verbindungselement ist am hinteren Ende jedes Werkzeugkopfes angeordnet und eine Verbindungseinrichtung am vorderen Ende des Basiskörpers. Das Verbindungselement eines beliebigen von den Werkzeugköpfen mit der Verbindungseinrichtung ist am vorderen Ende des Basiskörpers lösbar verbunden. Das hintere Ende des Verbindungselementes ist mit dem vorderen Ende des Rotors lösbar verbunden. Die lösbare Verbindung des an dem hinteren Ende des Werkzeugkopfes angeordneten Verbindungselementes mit dem vorderen Ende des Rotors gewährleistet, dass ein Drehmoment bei der Drehung der Schaufel zu den einzelnen Werkzeugköpfen übertragen wird.

In der DE 20 2006 008 056 U1 wird eine Kraftübertragungseinrichtung zur Übertragung eines Drehmoments, das kleiner als ein einstellbarer Wert ist, beschrieben. Die dort beschriebene Kraftübertragungseinrichtung wird dabei als Steckschlüssel eingesetzt.

Die TW M2789822 offenbart eine Kraftübertragungseinrichtung mit einstellbarem Drehmoment. Die Kraftübertragungseinrichtung umfasst ein Antriebsmittel, eine Hülse oder Muffe, ein Keilelement und eine Feder. Das Antriebsmittel ist mit der Hülse so verbunden, dass sie in Bezug aufeinander bewegt und gedreht werden können. Durch Einstellen der relativen axialen Position zwischen dem Antriebsmittel und der Hülse wird die in die Feder eingebrachte Kraft eingestellt und so das maximale Drehmoment, das zwischen dem Keilelement und der Hülse übertragen werden kann.

In der DE 20 2011 050 280 U1 wird ein einstellbarer Drehmomentschlüssel mit einem Werkzeugantriebsteil beschrieben. Das Drehmomentwerkzeug weist dort einen rohrförmigen Werkzeugschaft auf, welcher sich in seine Längsrichtung erstreckt. An dessen einem ersten Endabschnitt ist ein Handgriff angeordnet, welcher um die Längsachse herum drehbar an dem Werkzeugschaft gelagert ist. Der Handgriff ist mit einer Spanneinheit im Inneren des Handgriffs und/oder Werkzeugschafts direkt oder indirekt gekoppelt. Durch die Drehung des Handgriffs wird eine Spiralfeder gespannt oder entlastet, über welche das jeweils aufzubringende Anzugsmoment voreingestellt wird. Der Handgriff weist ferner einen Klapphebel auf, welcher in seiner Ruheposition an dem Handgriff anliegt. In einem Übergangsbereich zwischen dem Werkzeugschaft und dem Handgriff ist eine Skala angeordnet, welche numerische Angaben über das jeweils aktuell eingestellte Anzugsmoment aufweisen kann. Der Übergangsbereich ist gegenüber dem Werkzeugschaft verjüngt, wobei er in seinem Querschnitt reduziert ist. Ein dem ersten Endabschnitt gegenüberliegender zweiter Endabschnitt des Werkzeugschaftes dient der Kopplung mit einem Werkzeugantriebsteil, welcher der Aufnahme von Werkzeugen dient, in der Regel Aufsteckwerkzeuge. Hierfür ist der ansonsten im Querschnitt kreisförmige Werkzeugschaft an seinem zweiten Endabschnitt geplättet, so dass sich endseitig eine rechteckförmige Öffnung ausbildet.

Aus der deutschen Offenlegungsschrift DE 100 51 011 A1 ist ein auslösender Drehmomentschlüssel bekannt, der das Drehmoment elektronisch erfasst. Mit einem Dehnmessstreifen wird das mechanische Drehmoment in ein elektronisches Signal umgewandelt. Das so erfasste Drehmoment wird mit einem Sollwert verglichen. Erreicht das gemessene Drehmoment den eingestellten oder vorgegebenen Drehmomentsollwert, wird durch die elektronische Auswertung der Drehmomentschlüssel mechanisch zumindest kurzzeitig freigegeben. Die Freigabe erfolgt hier beispielsweise durch Entkopplung von Schlüsselgriff und Schlüsselkopf.

Die DE 20 2014 00 0041 U1 betrifft ein auslösendes Drehmomentwerkzeug, welches ein schaftartiges Gehäuse mit einem Griffbereich und einem Kopfbereich enthält. Eine Übertragungsanordnung ist in dem Gehäuse zur Übertragung des Drehmoments vorgesehen. Das Drehmomentwerkzeug weist ferner eine Stellvorrichtung mit einem Stellknopf zum Einstellen eines gewünschten Drehmoments auf, bei dem das erreichte Drehmoment signalisiert wird. Eine Anzeige zeigt einen Drehmomentwert an, bei dem das Drehmomentwerkzeug auslösen soll. Ferner enthält das Drehmomentwerkzeug einen Auslösemechanismus, mit dem das Drehmomentwerkzeug beim eingestellten Drehmoment auslöst.

Aus der DE 10 2006 013 147 A1 ist ein Drehmomentwerkzeug zum Messen und/oder zum auslösenden Anziehen eines Drehmoments an einem Werkstück bekannt. Das Drehmomentwerkzeug enthält ein Gehäuse mit einem Griff und einen Stab zum Übertragen des Drehmoments. Ein Messelement dient zur elektronischen Erfassung des Drehmoments, welches von einer Mess- und Steuerelektronik verarbeitet wird. Ein durch die elektronische Mess- und Steuerelektronik gesteuerter Auslöseschalter löst bei einem Sollwert das Drehmomentwerkzeug aus. Der dort beschriebene Drehmomentschlüssel weist einen Untersetzungsmechanismus auf, welcher wenigstens ein von dem Auslöseschalter betätigtes Stellglied aufweist. Dabei ist der Untersetzungsmechanismus zwischen dem Stab zur Übertragung des Drehmoments und dem elektronisch gesteuerten Auslöseschalter zur Auslösung des Drehmomentwerkzeugs angeordnet. In diesem Dokument wird beschrieben, dass der Untersetzungsmechanismus einen Schalthebel mit einer Schaltkante enthält, der durch den elektronisch gesteuerten Auslöseschalter angesteuert wird.

Die FR3034033A1 offenbart einen "Auslösemechanismus" für ein drehend arbeitendes Werkzeug, wie z.B. einen Schraubendreher oder eine Drehmomentscheibe, mit einem Betätigungselement, das im Körper des Werkzeugs untergebracht und in diesem Körper fest montiert ist. Das Betätigungselement wirkt um eine rotationssymmetrische Längsachse drehend durch eine mechanische oder andere Verbindung auf eine horizontale Platte. Die Platte weist Mittel zum Eingriff mit der Verbindung auf.

Dabei ist die horizontale Platte über ihren gesamten Außenumfang durch einen vertikalen Flansch nach unten verlängert. Der Flansch weist eine Aufnahme auf, die geeignet ist, ein Verriegelungsmittel aufzunehmen. Die FR 3034033A1 offenbart die Merkmale der Oberbegrifts der Anspruchs 1.

Aus der EP 2 777 883 A1 ist ein Elektrowerkzeug bekannt, welches ein Gehäuse mit einem Handgriff umfasst. Eine Welle ist dem Gehäuse rotierend gelagert. An der rotierenden Welle ist eine Sockelhaltevorrichtung befestigt, um einen Sockel an der rotierenden Welle zu befestigen. Ein Auslösemechanismus enthält einen an dem Gehäuse angebrachten Aktuator. Durch Betätigung des Aktuators wird die Sockelhalterung von dem Sockel gelöst, damit die Sockelhalterung von der rotierenden Welle abgekoppelt werden kann.

### Offenbarung der Erfindung

Aufgabe der Erfindung ist es daher, Nachteile des Standes der Technik zu vermeiden und ein auslösendes Drehmomentwerkzeug zu schaffen, welches einfach aufgebaut und kostengünstig in der Herstellung ist. Dabei soll die Wirkung besonders auch bei motorisch angetriebenen Drehmomentwerkzeugen eine hohe Wirksamkeit beim Auslösen erreichen.

Erfindungsgemäß wird die Aufgabe dadurch gelöst, dass bei einem Drehmomentwerkzeug zum Anziehen einer Schraube oder dgl. mit einem Solldrehmoment der eingangs genannten Art
i) der Ausweichraum von einer axialen Bohrung in dem Adapter gebildet wird, in welche das Verriegelungselement zum Entriegeln des Verriegelungsmechanismus mittels des elektrisch betriebenen Aktuators mit einem axialen Stift zum Auslösen bewegt wird.

Die Erfindung beruht auf dem Prinzip, dass der Antrieb, sei er maschinell oder manuell, bei Erreichen eines Solldrehmoments keinen Einfluss mehr auf die Verschraubung hat. Der Antrieb zur Übertragung eines Drehmoments wird dazu entkoppelt, indem der Adapter von dem das Drehmoment übertragenden Gehäuse entriegelt wird. Der Adapter ist dazu in dem Gehäuse des Grundkörpers drehbar gelagert und kann daher im entriegelten Zustand frei laufen. Erst durch die Verriegelung wird das Gehäuse mit dem Adapter gekoppelt, so dass über das Gehäuse mit dem Antriebsschaft ein Drehmoment bis zum Solldrehmoment übertragen werden kann. Das zu erreichende Solldrehmoment lässt sich mit geeigneten Mitteln voreinstellen.

Als vorteilhafte Ausgestaltung des erfindungsgemäßen Drehmomentwerkzeugs hat sich erwiesen, wenn ein elektrisch betriebener Aktuator, beispielsweise ein elektronisch gesteuerter Hubmagnet, vorgesehen ist, welcher den Verriegelungsmechanismus bei Erreichen des Solldrehmoments entriegelt. Elektrisch betriebene Aktuatoren, wie die Hubmagneten, sind bekannte und einfach herzustellende Bauteile. Der Verriegelungsmechanismus lässt sich außerdem auf diese Weise mit einem Hubmagneten einfach elektronisch ansteuern und bedienen. Ein geeignetes elektrisches Signal ist hierfür ausreichend, um den Hubmagneten zu aktivieren.

Erfindungsgemöß weist der Adapter eine radiale Bohrung mit wenigstens einem Verrieglungselement auf, wobei das Verrieglungselement mit Hilfe des elektrisch betriebenen Aktuators zum Verriegeln aus der Bohrung in eine Ausnehmung des Gehäuses geschoben wird und zum Entriegeln sich das Verriegelungselement in einen Ausweichraum bewegt. Diese Maßnahme ermöglicht auf simple Weise einen elektronisch angesteuerten Verriegelungs- bzw. Entriegelungsmechanismus zu realisieren. Als elektrisch betriebener Aktuator eignet sich der Hubmagnet. Die Bewegungsrichtung des Hubmagneten lässt sich damit von einer axialen Richtung in eine radiale Richtung zum Auslösen umlenken, so dass die Anordnung des Hubmagneten platzsparend in dem Drehmomentwerkzeug erfolgen kann.

In einer besonderen und zweckmäßigen Ausgestaltung des erfindungsgemäßen auslösenden Drehmomentwerkzeugs ist das Verriegelungselement des Verriegelungsmechanismus zum Verriegeln mit einem Federelement vorgespannt. Diese Maßnahme dient dazu das Verriegelungselement elastisch in einem verriegelten Zustand zu lassen. Erst durch Überwinden der Federkraft des Federelements lässt sich der Verriegelungsmechanismus entriegeln.

Erfindungsgemäß wird der Ausweichraum von einer axialen Bohrung in dem Adapter gebildet, in welche das Verriegelungselement zum Entriegeln des Verriegelungsmechanismus mittels des elektrisch betriebenen Aktuators zum Auslösen bewegt wird. Hierfür ist der Hubmagnet als elektrisch betriebener Aktuator besonders geeignet. Diese Maßnahme dient dazu die lineare Bewegung des Hubmagneten in dem ansonsten rotierenden System Verriegelungsmechanismus in geeigneter Weise in einen verriegelnden bzw. entriegelnden Zustand umzusetzen. Dabei ist diese Art der Ausgestaltung des Verriegelungsmechanismus besonders verschleißarm und damit wenig fehleranfällig.

Das erfindungsgemäße auslösende Drehmomentwerkzeug wird in einer bevorzugten Variante weiterhin dadurch ausgestaltet, dass ein federbelasteter Sperrkörper mit einem Ausweichraum vorgesehen ist, wobei das Verriegelungselement zum Entriegeln des Verriegelungsmechanismus mittels des elektrisch betriebenen Aktuators, wie dem Hubmagneten, in den Ausweichraum bewegt wird und zum Verriegeln der Sperrkörper das Verriegelungselement in die Ausnehmung des Gehäuses schiebt. Diese Maßnahme ist eine Alternative zu einem Ausweichraum in dem Adapter. Anstelle dessen wird der Ausweichraum nun in dem Sperrkörper untergebracht. Der federbelastete Sperrkörper lässt sich dabei beispielsweise von dem Hubmagneten gut zum Entriegeln ansteuern. Zusätzlicher Ausweichraum muss in dem Adapter nicht geschaffen werden. Hierdurch kann das Drehmomentwerkzeug durchaus kompakter ausgebildet werden.

In einer weiteren vorteilhaften Variante des erfindungsgemäßen auslösenden Drehmomentwerkzeugs ist der Ausweichraum in einem federbelasteten Sperrhebel vorgesehen, Zum Entriegeln bewegt der Sperrhebel das Verriegelungselement des Verriegelungsmechanismus mittels des elektrisch betriebenen Aktuators, wie dem Hubmagneten, in den Ausweichraum. Zum Verriegeln schiebt der Sperrhebel das Verriegelungselement in die Ausnehmung. Auch bei dieser Maßnahme befindet sich der Ausweichraum für das Verriegelungselement des Verriegelungsmechanismus nicht in dem Adapter bzw. in dem Grundkörper, sondern in dem Sperrhebel. Der federbelastete Sperrhebel hält im verriegelten Zustand das Verriegelungselement in der Ausnehmung fest. Erst durch Schwenken des Sperrhebels gelangt das Verriegelungselement in den Ausweichraum.

Eine weitere vorteilhafte Alternative des erfindungsgemäßen auslösenden Drehmomentwerkzeugs besteht darin, dass der Ausweichraum von einem federbelasteten Körper mit einem kegelförmigen Ansatz gebildet wird, welcher in einem axialen Kanal des Grundkörpers angeordnet ist, wobei das Verriegelungselement zum Entriegeln des Verriegelungsmechanismus mittels des elektrisch betriebenen Aktuators, wie z.B. dem Hubmagneten, in den Ausweichraum bewegt wird und zum Verriegeln der Körper mit dem kegelförmigen Ansatz das Verriegelungselement in die Ausnehmung des Gehäuses schiebt. Das Drehmomentwerkzeug lässt sich mit einem solchen Verriegelungsmechanismus besonders einfach und vorteilhaft herstellen. Der Körper kann hierbei beispielsweise ein Zylinder sein, welcher über einen Ansatz verfügt, der konisch verläuft. Der Platz für den Ausweichraum entsteht zum Entriegeln zwischen diesen konischen Bereich und dem Kanal. Der Zylinder mit dem konischen Ansatz muss zum Auslösen nur in die richtige Richtung bewegt werden, um den Ausweichraum für das Entriegeln zu schaffen.

Vorzugsweise ist das Verriegelungselement des Verriegelungsmechanismus als Kugel ausgebildet. Kugeln sind industrielle Standardelemente, wie sie beispielsweise auch In Kugellagern verwendet werden. Damit lässt sich der Verriegelungsmechanismus einfach und kostengünstig herstellen. Anstelle von nur einer Kugel können selbstverständlich auch mehrere Kugeln in beliebiger Anzahl als Verriegelungselement verwendet werden. Anstelle der Kugeln können auch Zylinderrollen verwendet werden. Ihnen können in diesem technischen Zusammenhang ähnliche Funktionen und Eigenschaften wie den Kugeln zugesprochen werden.

Eine weitere vorteilhafte Variante des erfindungsgemäßen Drehmomentwerkzeugs besteht darin, dass der Antriebsschaft als Torsionsstab ausgebildet ist. Der Torsionsstab verformt sich beim Übertragen eines Drehmoments elastisch. Hierdurch lässt sich anhand des Verformungsgrads das Drehmoment erfassen.

In einer Weiterbildung des erfindungsgemäßen Drehmomentwerkzeugs enthalten die Erfassungs- und Auswertemittel daher einen Dehnungsmessstreifen, welcher an dem Torsionsstab zur Erfassung des Drehmoments vorgesehen ist. Der Dehnungsmessstreifen erfasst die Verformung des Torsionsstabs und erzeugt ein entsprechendes Signal, welches dem jeweils anliegenden Drehmoment entspricht.

Eine zweckmäßige Weiterbildung des erfindungsgemäßen Drehmomentwerkzeugs ergibt sich ferner dadurch, dass die Erfassungs- und Auswertemittel eine elektronische Steuereinheit aufweisen, welche den elektrisch betriebenen Aktuator, wie z.B. den Hubmagneten, des Auslösemechanismus zum Auslösen ansteuern. Die elektronische Steuereinheit kann dabei prozessorgesteuert ausgebildet sein. Hierdurch kommt es zu einer relativ vereinfachten Signalverarbeitung. Die jeweils anliegenden und aktuellen Drehmomente müssen immer mit dem Solldrehmoment verglichen werden. Sobald das Solldrehmoment erreicht ist, steuert die Steuerelektronik den elektrisch betriebenen Aktuator, wie z.B. den Hubmagneten, des Auslösemechanismus an, indem sie beispielsweise einen elektrischen Impuls dorthin übermittelt.

Eine weitere vorteilhafte Ausgestaltung des erfindungsgemäßen Drehmomentwerkzeugs wird dadurch erzielt, dass das Betätigungswerkzeug einen maschinellen Antrieb aufweist. Ein manuell bedientes Drehmomentwerkzeug ermöglicht einem Nutzer vielleicht das Gefühl für ein Drehmoment zu vermitteln, jedoch In der heutigen industriellen Fertigung sind schnelle Vorgänge für eine möglichst hohe Produktivität erforderlich. Daher dient diese Maßnahme dazu die Produktivität erheblich zu erhöhen. Das Drehmomentwerkzeug ist in seinem Aufbau auch besonders geeignet dafür.

Weitere Ausgestaltungen und Vorteile ergeben sich aus dem Gegenstand der Unteransprüche sowie den Zeichnungen mit den dazugehörigen Beschreibungen. Ausführungsbeispiele sind nachstehend unter Bezugnahme auf die beigefügten Zeichnungen näher erläutert. Die Erfindung soll nicht alleine auf diese aufgeführten Ausführungsbeispiele beschränkt werden. Sie dienen lediglich zur näheren Erläuterung der Erfindung.

### Kurze Beschreibung der Zeichnung

- Fig. 1: zeigt in einer schematischen Prinzipskizze im axialen Längsschnitt einen erfindungsgemäßen Drehmomentschraubendreher im verriegelten Zustand.
- Fig. 2: zeigt in einem schematischen Querschnitt einen erfindungsgemäßen Drehmomentschraubendreher im verriegelten Zustand gemäß Fig. 1.
- Fig. 3: zeigt in einer schematischen Prinzipskizze im axialen Längsschnitt einen erfindungsgemäßen Drehmomentschraubendreher im entriegelten Zustand.
- Fig.4: zeigt in einem schematischen Querschnitt einen erfindungsgemäßen Drehmomentschraubendreher im entriegelten Zustand gemäß Fig. 3.
- Fig. 5: zeigt in einem weiteren Ausführungsbeispiel im axialen Längsschnitt ein erfindungsgemäßes Drehmomentwerkzeug im verriegelten Zustand.
- Fig. 6: zeigt in einem schematischen Querschnitt ein erfindungsgemäßes Drehmomentwerkzeug im verriegelten Zustand gemäß Fig. 5.
- Fig. 7: zeigt in einem axialen Längsschnitt das erfindungsgemäße Drehmomentwerkzeug gemäß den Fig. 5 und 6 im entriegelten Zustand.
- Fig.8: zeigt in einem schematischen Querschnitt das erfindungsgemäße Drehmomentwerkzeug im entriegelten Zustand gemäß den Fig. 5 bis 7.
- Fig. 9: zeigt in einem dritten Ausführungsbeispiel im axialen Längsschnitt ein erfindungsgemäßes Drehmomentwerkzeug im verriegelten Zustand.
- Fig. 10: zeigt in einem schematischen Querschnitt ein erfindungsgemäßes Drehmomentwerkzeug Im verriegelten Zustand gemäß Fig. 9.
- Fig. 11: zeigt in einem axialen Längsschnitt das erfindungsgemäße Drehmomentwerkzeug gemäß den Fig. 9 und 10 im entriegelten Zustand.
- Fig. 12: zeigt in einem schematischen Querschnitt das erfindungsgemäße Drehmomentwerkzeug im entriegelten Zustand gemäß den Fig. 9 bis 11.
- Fig. 13: zeigt in einem vierten Ausführungsbeispiel im axialen Längsschnitt ein erfindungsgemäßes Drehmomentwerkzeug im verriegelten Zustand.
- Fig. 14: zeigt in einem schematischen Querschnitt ein erfindungsgemäßes Drehmomentwerkzeug im verriegelten Zustand gemäß der Fig. 13.
- Fig. 15: zeigt in einem fünften Ausführungsbeispiel im axialen Längsschnitt einen erfindungsgemäßen Auslösemechanismus für ein Drehmomentwerkzeug im verriegelten Zustand.
- Fig. 16: zeigt im axialen Längsschnitt den erfindungsgemäßen Auslösemechanismus gemäß Fig. 15 für ein Drehmomentwerkzeug im entriegelten Zustand.

### Bevorzugtes Ausführungsbeispiel

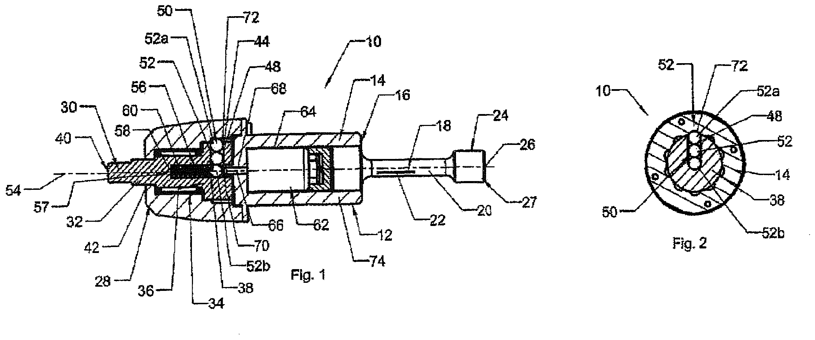

In Fig. 1 wird mit 10 ein erfindungsgemäßer Drehmomentschraubendreher zum Anziehen einer Schraube oder dgl. mit einem Solldrehmoment bezeichnet. Der Drehmomentschraubendreher 10 ist in Fig. 1 in einem axialen Längsschnitt schematisch dargestellt. Der Drehmomentschraubendreher 10 umfasst einen Grundkörper 12 mit einem Gehäuse 14. In einem vorderen Bereich 16 des Gehäuses 14 ist ein Antriebsschaft 18 fixiert. Der Antriebsschaft 18 bildet einen Torsionsstab 20, welcher fest mit dem Gehäuse 14 verbunden ist. An dem Torsionsstab 20 ist ein Dehnungsmessstreifen 22 zur Erfassung eines zu übertragenden Drehmoments auf ein nicht dargestelltes Werkstück angeordnet. Der Antriebsschaft 18 hat an seinem Ende 24 einen als Aufnahme 26 ausgebildeten Verbindungsbereich 27 für ein geeignetes Antriebswerkzeug. Das Antriebswerkzeug überträgt das Drehmoment über den Torsionsstab 20 auf das Gehäuse 14.

An einem Ende 28 des Gehäuses 14, weiches dem Antriebsschaft 18 gegenüberliegt, ist ein Adapter 30. Der Adapter 30 kann für Einsteck- oder Aufsteckwerkzeuge vorgesehen sein. Der Adapter 30 weist eine axial zum Gehäuse 14 verlaufende Welle 32 auf. Die Welle 32 ist ein einem Nadellager 34 drehbar gelagert. An einem Endstück 36 der Welle 32 ist eine Scheibe 38 im Wesentlichen senkrecht zu dieser angeordnet. Die Scheibe 38 befindet sich in dem Gehäuse 14 des Grundkörpers 12. Die Scheibe 38 ist mit der Welle 32 starr verbunden, so dass die Scheibe 38 immer mit der Welle 32 rotiert. Die Welle 32 ist weiterhin mit einem Ende 40 aus dem Gehäuse 14 herausgeführt. Ein Sicherungsring 42 schließt das Gehäuse 14 ab und hält das Lager mit einem Teil der Welle 32 in dem Gehäuse 14. Das aus dem Gehäuse herausgeführte Ende 40 umfasst einen Kupplungsbereich, beispielsweise zum Einstecken oder zum Aufstecken eines - hier nicht dargestellten - Betätigungswerkzeugs. Die Betätigungswerkzeuge werden über den Adapter 30 und über das Gehäuse 14 zum Übertragen des Drehmoments angetrieben.

Der Drehmomentschraubendreher 10 verfügt über einen Auslösemechanismus 44, welcher einen Verriegelungsmechanismus 46 enthält. Dazu weist die Scheibe 38 des Adapters 30 eine radiale Bohrung 48 auf. In der radialen Bohrung 48 sind Verriegelungselemente 50 vorgesehen. Bei den Verriegelungselementen 50 handelt es sich im vorliegenden Ausführungsbeispiel um Stahlkugeln 52, welche die radiale Bohrung 48 vollständig auffüllen. Andere Formen und Materialien für die Verriegelungselemente 50 sind sicherlich auch denkbar.

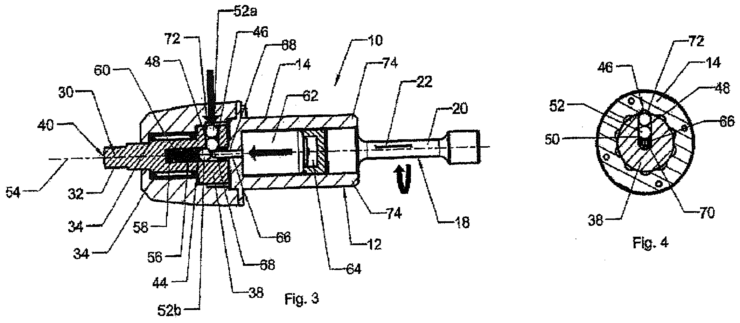

Fig. 2 zeigt schematisch im Querschnitt den Bereich der Scheibe 38 des Adapters 30. Die Stahlkugeln 52 liegen aneinandergereiht in der radialen Bohrung 48. Die entriegelte Scheibe 38 des Adapters 30 ist drehbar in dem Gehäuse 14 vorgesehen, siehe Fig. 3 u. 4. Die äußerste Stahlkugel 52a ragt in eine innere Ausnehmung 72. Soweit die Fig. 2 der Fig. 1 entspricht, werden auch die gleichen Bezugszeichen verwendet.

Wie die Fig. 1 wieder zeigt, schließt sich eine axiale Bohrung 56 an das zur Rotationsachse 54 zeigende Ende 57 der radialen Bohrung 48 an. Die axiale Bohrung 56 verfügt über denselben Querschnitt wie die radiale Bohrung 48 und dient als Ausweichraum 58. In der axialen Bohrung 56 ist ferner eine Spiralfeder 60 als Federelement vorgesehen, welche die Stahlkugeln 52 in die radiale Bohrung 48 mit ihrer Federkraft schiebt. Hierdurch sind die Stahlkugeln 52 in der radialen Bohrung 48 vorgespannt.

Ein elektrisch betriebener Hubmagnet 62 ist in einer inneren Kammer 64 des Gehäuses 14 angeordnet. Der Hubmagnet 62 bildet einen elektrischen Aktuator. Der Hubmagnet 62 weist einen axialen Stift 66 auf, welcher durch einen axialen Durchgang 68 der Kammer 64 geführt ist. Der axiale Durchgang 68 mündet in einer axialen Endöffnung 70 der radialen Bohrung 48. Sowohl der Durchmesser des Stiftes 66 als auch der Durchmesser der axialen Endöffnung 70 Ist geringer als der Durchmesser der Stahlkugeln 52. Dadurch können die Stahlkugeln 52 nicht durch die axiale Endöffnung 70 gelangen.

Im Ausführungsbeispiel von Fig. 1 und 2 ist der Drehmomentschraubendreher 10 zur Übertragung eines Drehmoments in einem verriegelten Zustand dargestellt. Dazu ragt die äußerste Stahlkugel 52a in die innere Ausnehmung 72 des Gehäuses 14. Sobald der Antriebsschaft 18 durch das Antriebswerkzeug angetrieben wird, dreht sich das Gehäuse 14 aufgrund der Verriegelung zusammen mit dem Adapter 30 mit. Der so in dem Gehäuse 14 fixierte Adapter 30 kann so das Drehmoment auf eine Verschraubung übertragen.

Durch die Torsion des Torsionsstabs 20 bei der Übertragung eines Drehmoments auf eine Verschraubung liefert der Dehnungsmessstreifen 22 ein Signal, welches dem aktuellen Drehmoment entspricht, an Erfassungs- und Auswertemittel 74. Bei den Erfassungs- und Auswertemitteln 74 handelt es sich beispielsweise um eine prozessorgesteuerte Steuerelektronik, welche die analogen Signale des Dehnungsmessstreifen 22 zunächst über einen Analog-Digitalwandler digitalisiert und dann digital verarbeitet. Diese Steuerelektronik enthält einen digitalen Speicher, um ein Solldrehmoment vorzugeben und zu speichern. Die Steuerelektronik kann grundsätzlich intern im oder am Grundkörper 12 des Drehmomentschraubendrehers 10 oder extern angeordnet sein. Im Falle einer externen Steuerelektronik müssen dem Fachmann bekannte Möglichkeiten zum Signalaustausch geschaffen werden. Die Steuerelektronik wertet das anliegende Drehmoment aus, in dem es insbesondere mit dem Solldrehmoment verglichen wird. Bei Erreichen des Solldrehmoments steuert die Steuerelektronik den Hubmagneten 62 zum Auslösen an.

Die Fig. 3 und 4 zeigen den erfindungsgemäßen Drehmomentschraubendreher 10 in einem ausgelösten Zustand. Die Fig. 3 entspricht dabei dem axialen Längsschnitt der Fig. 1 und die Fig. 4 dem Querschnitt im Bereich der Scheibe 38 der Fig. 2. Soweit Übereinstimmung bei den Figuren besteht, werden auch die gleichen Bezugszeichen verwendet.

Sobald ein Schwellwert für ein eingestelltes Solldrehmoment erreicht wird, löst der Drehmomentschraubendreher 10 aus, wie in den Fig. 3 bzw. 4 dargestellt ist. Dazu aktiviert die Steuerelektronik den Hubmagneten 62, dessen Stift 66 durch den Durchgang 68 und die axiale Endöffnung 70 in die radiale Bohrung 48 dringt. Dabei schiebt der Stift 66 des Hubmagnets eine Stahlkugel 52b der Verriegelungselemente 50 gegen die Federkraft der Spiralfeder 60 in den Ausweichraum 58, die axiale Bohrung 56 der Welle 32. Die Stahlkugeln 52 können nachrutschen, so dass die äußerste Stahlkugel 52a aus der inneren Ausnehmung 72 des Gehäuses 14 herausgelangt und die Verriegelung freigibt. In diesem entriegelten Zustand kann der Adapter 30 in dem Nadellager frei laufen. Das Drehmoment wird von dem Grundkörper 12 nicht mehr auf den Adapter 30 übertragen.

Zum Verriegeln bewegt sich der Hubmagnet 62 wieder in seine verriegelnde Ausgangsstellung zurück. Dadurch kann die Spiralfeder 60 die Stahlkugel 52b aus der axialen Bohrung 56 der Welle 32 wieder in die radiale Bohrung 48 schieben. Hierdurch gelangt die äußere Stahlkugel 52a zum Verriegeln wieder in die innere Ausnehmung 72 des Gehäuses 14.

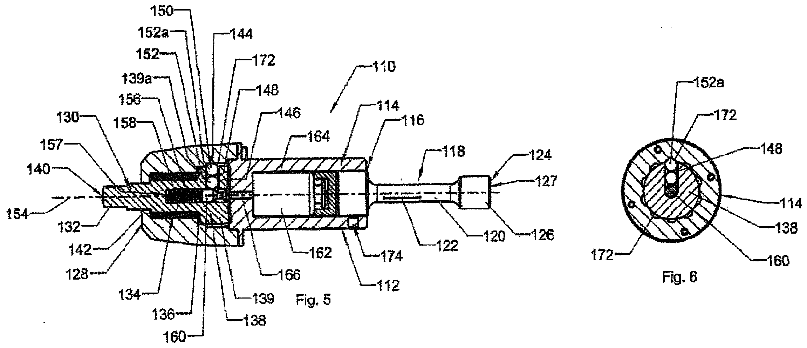

In Fig. 5 wird mit 110 ein erfindungsgemäßes Drehmomentwerkzeug zum Anziehen einer Schraube oder dgl. mit einem Solldrehmoment bezeichnet. Das Drehmomentwerkzeug 110 ist in Fig. 5 in einem axialen Längsschnitt schematisch dargestellt. Das Drehmomentwerkzeug 110 umfasst einen Grundkörper 112 mit einem Gehäusekörper 114. In einem vorderen Bereich 116 des Gehäusekörpers 114 ist ein Antriebsschaft 118 fixiert. Der Antriebsschaft 118 bildet einen Torsionsstab 120, welcher fest mit dem Gehäusekörper 114 verbunden ist. An dem Torsionsstab 120 ist ein Dehnungsmessstreifen 122 zur Erfassung eines zu übertragenen Drehmoments auf ein nicht dargestelltes Werkstück angeordnet. Der Antriebsschaft 118 hat an seinem Ende 124 einen als Aufnahme 126 ausgebildeten Verbindungsbereich 127 für ein geeignetes Antriebswerkzeug. Das Antriebswerkzeug überträgt das Drehmoment über den Torsionsstab 120 auf den Gehäusekörper 114.

An einem Ende 128 des Gehäusekörpers 114, welches dem Antriebsschaft 118 gegenüberliegt, ist ein Adapter 130. Der Adapter 130 kann für Einsteck- oder Aufsteckwerkzeuge vorgesehen sein. Der Adapter 130 weist eine axial zum Gehäusekörper 114 verlaufende Welle 132 auf. Die Welle 132 ist in einem Nadellager 134 drehbar gelagert. An einem Endstück 136 der Welle 132 ist eine Scheibe 138 im Wesentlichen senkrecht zu dieser angeordnet. Die Scheibe 138 besteht dabei aus einem zylinderförmigen Körper 139, dessen eine flache Seite 139a zentrisch an der Welle 132 befestigt ist. Dabei befindet sich die Scheibe 138 in dem Gehäusekörper 114 des Grundkörpers 112. Die Scheibe 138 ist mit der Welle 132 starr verbunden, so dass die Scheibe 138 immer mit der Welle 132 rotiert. Die Welle 132 ist weiterhin mit einem Ende 140 aus dem Gehäusekörper 114 herausgeführt. Ein Sicherungsring 142 schließt der Gehäusekörper 114 ab und hält das Nadellager 134 mit einem Teil der Welle 132 in dem Gehäusekörper 114. Das aus dem Gehäusekörper herausgeführte Ende 140 der Welle 132 umfasst einen Kupplungsbereich, beispielsweise zum Einstecken oder zum Aufstecken eines - hier nicht dargestellten - Betätigungswerkzeugs. Die Betätigungswerkzeuge werden über den Adapter 130 und über den Gehäusekörper 114 zum Übertragen des Drehmoments angetrieben.

Das Drehmomentwerkzeug 110 verfügt über einen Auslösernechanismus 144, welcher einen Verriegelungsmechanismus 146 enthält. Dazu weist die Scheibe 138 des Adapters 130 eine radiale Bohrung 148 auf. In der radialen Bohrung 148 sind Verriegelungselemente 150 vorgesehen. Bei den Verriegelungselementen 150 handelt es sich im vorliegenden Ausführungsbeispiel um Stahlkugeln 152, welche die radiale Bohrung 148 vollständig auffüllen, Andere Formen und Materialien für die Verriegelungselemente 150 sind jedoch auch bei diesem Ausführungsbeispiel sicherlich denkbar.

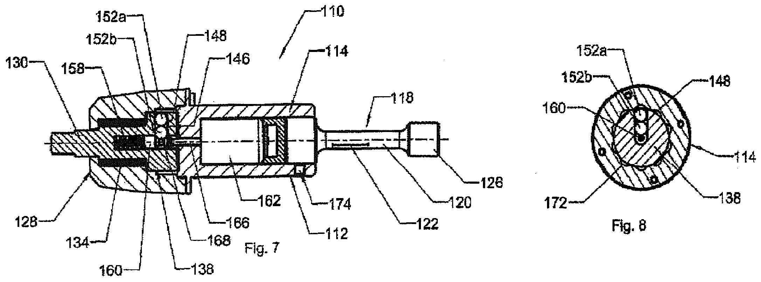

Die Fig. 6 zeigt schematisch im Querschnitt den Bereich der Scheibe 138 des Adapters 130. Die Stahlkugeln 152 liegen aneinandergereiht in der radialen Bohrung 148. Die entriegelte Scheibe 138 des Adapters 130 ist drehbar in dem Gehäusekörper 114 vorgesehen, siehe Fig. 7 u. 8. Die äußerste Stahlkugel 152a ragt in der verriegelten Position in eine innere Ausnehmung 172. Soweit die Fig. 6 der Fig. 5 entspricht, werden auch die gleichen Bezugszeichen verwendet.

Wie wiederum die Fig. 5 zeigt, schließt sich eine axiale Bohrung 156 an das zur Rotationsachse 154 zeigende Ende 157 der radialen Bohrung 148 an. In der axialen Bohrung 156 ist eine Spiralfeder 158 als Federelement vorgesehen, welche einen Sperrkörper 160 gegen einen Bolzen 166 eines elektrisch betriebenen Hubmagneten 162 schiebt. Hierdurch befinden sich die Stahlkugeln 152 in der radialen Bohrung 148, wie dargestellt, in einer Sperrposition. Der Sperrkörper 160 ist derart ausgeformt, dass die Stahlkugeln 152 dabei radial nach außen gedrückt werden, so dass die äußerste Stahlkugel 152a in die innere Ausnehmung 172 des Gehäusekörpers 114 zum Verriegeln ragt. Der Hubmagnet 162 bildet einen elektrischen Aktuator.

Der Hubmagnet 162 ist in einer inneren Kammer 164 des Gehäusekörpers 114 angeordnet. Der Hubmagnet 162 enthält den axialen Bolzen 166, gegen welchen der Sperrkörper 160 von der Spiralfeder 158 gedrückt wird.

Im Ausführungsbeispiel von Fig. 5 und 6 ist das Drehmomentwerkzeug 110 zur Übertragung eines Drehmoments in einem verriegelten Zustand dargestellt. Die äußerste Stahlkugel 152a ragt hierfür in die innere Ausnehmung 172 des Gehäusekörpers 114. Sobald der Antriebsschaft 118 durch den Antrieb angetrieben wird, dreht sich der Gehäusekörper 114 aufgrund der Verriegelung zusammen mit dem Adapter 130 mit. Der In dem Gehäusekörper 114 fixierte Adapter 130 kann so das gewünschte Drehmoment auf eine Verschraubung übertragen.

Durch die Torsion des Torsionsstabs 120 bei der Übertragung eines Drehmoments auf eine Verschraubung liefert der Dehnungsmessstreifen 122 ein Signal, welches dem aktuellen Drehmoment entspricht, an Erfassungs- und Auswertemittel 174. Bei den Erfassungs- und Auswertemitteln 174 handelt es sich beispielsweise um eine prozessorgesteuerte Steuerelektronik, welche die analogen Signale des Dehnungsmessstreifen 122 zunächst über einen Analog-Digitalwandler digitalisiert und dann digital verarbeitet. Diese Steuerelektronik enthält einen digitalen Speicher, um ein Solldrehmoment vorzugeben und zu speichern. Die Steuerelektronik kann grundsätzlich intern im oder am Grundkörper 112 des Drehmomentwerkzeugs 110 oder extern angeordnet sein. Im Falle einer externen Steuerelektronik müssen dem Fachmann bekannte Möglichkeiten zum Signalaustausch geschaffen werden. Die Steuerelektronik wertet das anliegende Drehmoment aus, in dem es insbesondere mit dem Solldrehmoment verglichen wird. Bei Erreichen des Solldrehmoments steuert die Steuerelektronik den Hubmagneten 162 an und betätigt diesen zum Auslösen.

Die Fig. 7 und 8 zeigen das erfindungsgemäße Drehmomentwerkzeug 110 in einem entriegelten bzw. ausgelösten Zustand. Die Fig. 7 entspricht dabei dem axialen Längsschnitt der Fig. 5 und die Fig. 8 dem Querschnitt im Bereich der Scheibe 138 der Fig. 6. Soweit Übereinstimmung bei den Figuren besteht, werden auch die gleichen Bezugszeichen verwendet.

Sobald ein Schwellwert für ein eingestelltes Solldrehmoment erreicht wird, löst das Drehmomentwerkzeug 110 aus, wie in den Fig. 5 bzw. 6 gezeigt ist. Dazu aktiviert die Steuerelektronik den Hubmagneten 162, dessen Bolzen 166 den Sperrkörper 160 gegen die Federkraft der Spiralfeder 158 verschiebt. Dabei gelangt die Stahlkugel 152b der Verriegelungselemente 150 in einen Ausweichraum 168 des Sperrkörpers 160. Die anderen Stahlkugeln 152 können nachrutschen, so dass die äußerste Stahlkugel 152a aus der inneren Ausnehmung 172 des Gehäusekörpers 114 herausgelangt und den Verriegelungsmechanismus 146 zum Auslösen entriegelt. In diesem entriegelten Zustand kann der Adapter 130 in dem Nadellager 134 frei laufen. Das Drehmoment wird von dem Grundkörper 112 nicht mehr auf den Adapter 130 übertragen.

Zum Verriegeln bewegt sich der Hubmagnet 162 mit seinem Bolzen 166 wieder in seine verriegelnde Ausgangsstellung zurück. Dadurch drückt die Spiralfeder 158 den Sperrkörper 160 in seine Sperrposition, wie in den Fig. 5 und 6 gezeigt, zurück. Die Stahlkugel 152b wird aus dem Ausweichraum 168 des Sperrkörpers 160 wieder in die radiale Bohrung 148 geschoben. Hierdurch gelangt die äußere Stahlkugel 152a zum Verriegeln wieder in die innere Ausnehmung 172 des Gehäusekörpers 114.

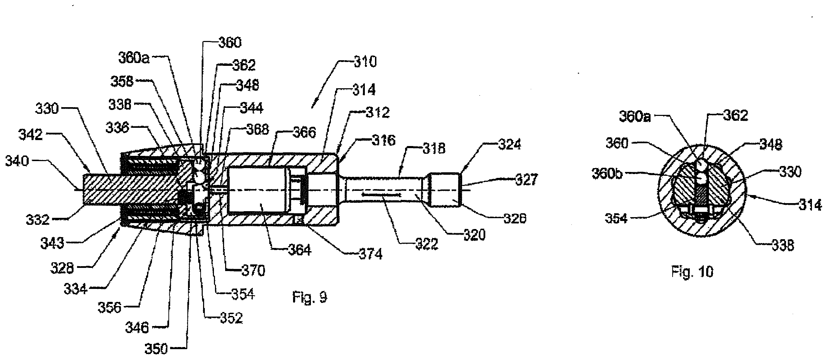

Die Fig. 9 zeigt ein weiteres Ausführungsbeispiel eines erfindungsgemäßen Drehmomentwerkzeugs 310 zum Anziehen einer Schraube oder dgl. mit einem Solldrehmoment. Das Drehmomentwerkzeug 310 ist in Fig. 9 in einem axialen Längsschnitt schematisch dargestellt. Das Drehmomentwerkzeug 310 umfasst einen Grundkörper 312 mit einem Gehäuse 314. In einem vorderen Bereich 316 des Gehäuses 314 ist ein Antriebsschaft 318 fixiert. Der Antriebsschaft 318 bildet einen Torsionsstab 320, welcher fest mit dem Gehäuse 314 verbunden ist. An dem Torsionsstab 320 ist ein Dehnungsmessstreifen 322 zur Erfassung eines zu übertragenden Drehmoments auf ein nicht dargestelltes Werkstück angeordnet. Der Antriebsschaft 318 hat an seinem Ende 324 einen als Aufnahme 326 ausgebildeten Verbindungsbereich 327 für ein geeignetes Antriebswerkzeug. Das Antriebswerkzeug überträgt das Drehmoment über den Torsionsstab 320 auf das Gehäuse 314

An einem Ende 328 des Gehäuses 314, welches dem Antriebsschaft 318 gegenüberliegt, ist ein Adapter 330. Der Adapter 330 kann für Einsteck- oder Aufsteckwerkzeuge vorgesehen sein. Der Adapter 330 weist eine axial zum Grundkörper 312 verlaufende Welle 332 auf. Die Welle 332 ist in einem Wälzlager bzw. einem Nadellager 334 drehbar gelagert. An einem Endstück 336 der Welle 332 ist ein Scheibenabschnitt 338 Im Wesentlichen senkrecht zu der Welle 332 angeordnet. Der Scheibenabschnitt 338 befindet sich in dem Gehäuse 314 und erstreckt sich in dieser Schnittdarstellung bis oberhalb der Rotationsachse 340 des Grundkörpers 312. Der Scheibenabschnitt 338 ist mit der Welle 332 starr verbunden, sodass der Scheibenabschnitt 338 immer mit der Welle 332 rotiert. Die Welle 332 ist weiterhin mit einem Ende 342 aus dem Gehäuse 314 herausgeführt. Ein Sicherungsring 343 schließt das Gehäuse 314 ab und hält das Lager mit einem Teil der Welle 332 in dem Gehäuse 314. Das aus dem Gehäuse 314 herausgeführte Ende 342 umfasst einen Kupplungsbereich, beispielsweise zum Einstecken oder zum Aufstecken eines - hier nicht dargestellten - Betätigungswerkzeugs. Die Betätigungswerkzeuge werden über den Adapter 330 und über das Gehäuse 314 bzw. den Grundkörper 312 zum Übertragen des Drehmoments angetrieben.

Der Drehmomentwerkzeug 310 verfügt über einen Auslösemechanismus 344, welcher einen Verriegelungsmechanismus 346 enthält. Dazu weist der Scheibenabschnitt 338 des Adapters 330 eine radiale Bohrung 348 auf. Auf einer radial gegenüberliegenden Seite 350 des Scheibenabschnitts 338 befindet sich eine Sperrhebelkammer 352.

In dieser Sperrhebelkammer 352 ist einen hammerförmiger Sperrhebel 354 vorgesehen, der an einem seinem äußeren Ende schwenkbar angeordnet ist. Der Sperrhebel 354 ist mit einer Feder 356 als Federelement vorbelastet. Der Sperrhebel 354 kann auch aus einem elastischen Metall bzw. Kunststoff mit hinreichender Härte hergestellt sein, sodass auf die separate Feder 356 grundsätzlich verzichtet werden kann. Die Feder 356 schwenkt den Sperrhebel 354 mit ihrer Federkraft um seine Schwenkachse in eine Sperrposition. Der Sperrhebel 354 drückt dabei Verriegelungselemente 358 in die radiale Bohrung 348. Bei den Verriegelungselementen 358 handelt es sich im vorliegenden Ausführungsbeispiel um Stahlkugeln 360, welche die radiale Bohrung 348 vollständig auffüllen. Andere Formen und Materialien für die Verriegelungselemente 358 sind grundsätzlich auch denkbar.

Fig. 10 zeigt schematisch im Querschnitt den Scheibenabschnitt 338 des Adapters 330. Die Stahlkugeln 360 befinden sich aneinandergereiht in der radialen Bohrung 348. Der entriegelte Scheibenabschnitt 338 des Adapters 330 ist drehbar in dem Gehäuse 314 analog zu den vorherigen Ausführungsbeispielen vorgesehen. Die äußerste Stahlkugel 360a ragt in eine der inneren Ausnehmungen 362. Soweit die Fig. 10 der Fig. 9 entspricht, werden auch die gleichen Bezugszeichen verwendet.

Wie die Fig. 9 wieder zeigt, ist ein elektrisch betriebener Hubmagnet 364 in einer inneren Kammer 366 des Gehäuses 314 angeordnet. Der Hubmagnet 364 weist einen axialen Stift 368 auf, welcher durch einen axialen Durchgang 370 der Kammer 366 geführt ist. Der Hubmagnet 364 bildet einen elektrischen Aktuator.

Im Ausführungsbeispiel von Fig. 9 und 10 ist der Drehmomentwerkzeug 310 zur Übertragung eines Drehmoments in einem verriegelten Zustand dargestellt. Dazu ragt die äußerste Stahlkugel 360a in die innere Ausnehmung 362 des Gehäuses 314. Sobald der Antriebsschaft 318 durch das Antriebswerkzeug angetrieben wird, dreht sich das Gehäuse 314 aufgrund der Verriegelung zusammen mit dem Adapter 330 mit. Der so in dem Gehäuse 314 bzw. in dem Grundkörper 312 fixierte Adapter 330 kann so das Drehmoment auf eine Verschraubung übertragen.

Durch die Torsion des Torsionsstabs 320 bei der Übertragung eines Drehmoments auf eine Verschraubung liefert der Dehnungsmessstreifen 322 ein Signal, welches dem aktuellen Drehmoment entspricht, an Erfassungs- und Auswertemittel 374. Bei den Erfassungs- und Auswertemitteln 374 handelt es sich beispielsweise um eine prozessorgesteuerte Steuerelektronik, welche die analogen Signale des Dehnungsmessstreifen 322 zunächst über einen Analog-Digitalwandler digitalisiert und dann digital verarbeitet. Diese Steuerelektronik enthält einen digitalen Speicher, um ein Solldrehmoment vorzugeben und zu speichern. Die Steuerelektronik kann grundsätzlich intern im oder am Grundkörper 312 des Drehmomentwerkzeugs 310 oder extern angeordnet sein. Im Falle einer externen Steuerelektronik müssen dem Fachmann bekannte Möglichkeiten zum Signalaustausch geschaffen werden. Die Steuerelektronik wertet das anliegende Drehmoment aus, in dem es insbesondere mit dem Solldrehmoment verglichen wird. Bei Erreichen des Solldrehmoments steuert die Steuerelektronik den Hubmagneten 364 zum Auslösen an.

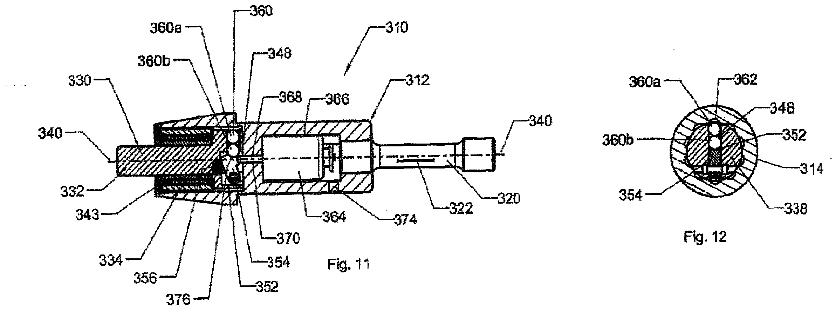

In den Fig. 11 und 12 ist das Drehmomentwerkzeug entsprechend den Fig. 9 und 10 im ausgelösten bzw. entriegelten Zustand dargestellt. Dabei zeigt die Fig. 11 einen axialen Längsschnitt des Drehmomentwerkzeugs 310 im entriegelten und ausgelösten Zustand. Die Fig. 12 zeigt einen entsprechenden schematischen Querschnitt. Soweit die Figuren 11 und 12 den Figuren 9 und 10 entsprechen, werden daher auch die gleichen Bezugszeichen verwendet.

Zum Auslösen bewegt der Hubmagnet 364 seinen axialen Stift 368 und schwenkt den hammerförmigen Sperrhebel 354, wie in den Fig. 11 und 12 zu sehen, gegen die Federkraft der Feder 356. Der Sperrhebel 354 gibt dadurch nun die radiale Bohrung 348 frei, sodass die innerste bzw. hier unterste Stahlkugel 360b in einen Ausweichraum 376 gelangen kann. Der Ausweichraum 376 wird von einer Aussparung des Sperrhebels 354 gebildet. Damit schieben sich die übrigen Stahlkugeln 362 und auch die äußerste Stahlkugel 360a nach innen in Richtung der Rotationsachse 340 und geben die Verriegelung des Verriegelungsmechanismus 346 frei. Das Drehmoment wird in diesem ausgelösten Zustand nun nicht mehr auf den Adapter 330 übertragen.

Zum Sperren zieht sich der axiale Stift 368 des Hubmagneten 364 zurück. Der hammerförmige Sperrhebel 354 schiebt mit der Federkraft der Feder 356 die innerste Stahlkugel 360b zurück in die radiale Bohrung 348. Dadurch werden auch die übrigen Stahlkugeln 360, insbesondere die äußerste Stahlkugel 360a, in den verriegelten Zustand bewegt. Die äußerste Stahlkugel 360a wird wieder in eine der inneren Ausnehmungen 362 zum Verriegeln geschoben, wie in den Figuren 9 und 10 dargestellt ist.

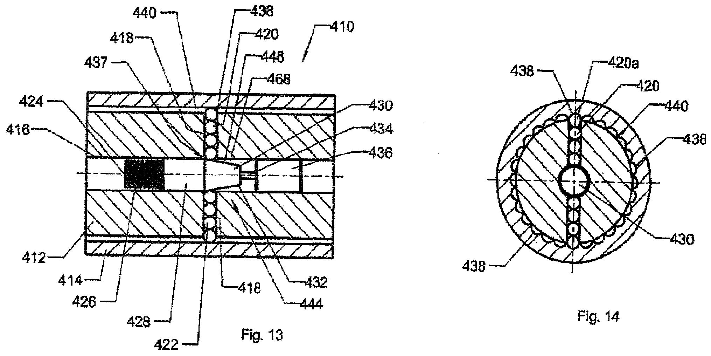

in Fig. 13 wird eine weitere Variante eines erfindungsgemäßen Drehmomentwerkzeugs 410 im axialen Längsschnitt gezeigt. Dabei ist allerdings nur ein Ausschnitt des Drehmomentwerkzeugs 410 mit einem Auslösemechanismus 444 und seinem Verriegelungsmechanismus 446 abgebildet. Das Drehmomentwerkzeug 410 umfasst einen zylinderförmigen Grundkörper 412 mit einer zylinderförmigen Gehäusehülle 414. In dem zylinderförmigen Grundkörper 412 befindet sich axial ein runder Kanal 416. Von dem Kanal 416 gehen zwei radiale Bohrungen 418 ab, die hier diametral gegenüberliegen. In den radialen Bohrungen 418 befinden sich Verriegelungselemente 420, welche als Stahlkugeln 422 ausgebildet sind.

In dem Kanal 416 befindet sich ferner ein Anschlag 424. Eine Spiralfeder 426 ist zwischen dem Anschlag 424 und einem Zylinder 428 angeordnet. Der Zylinder 428 weist auf seiner anderen Seite einen kegelförmigen Ansatz 430 auf. Der Zylinder 428 ist mit seinem kegelförmigen Ansatz 430 axial in dem Kanal 416 bewegbar. Der kegelförmige Ansatz 430 Ist zu seiner verjüngten Seite 432 abgestumpft. Die abgestumpfte Seite 432 wird durch die Federkraft der Spiralfeder 426 gegen einen Stift 434 eines elektronischen Hubmagneten 436 gedrückt.

Der Zylinder 428 befindet sich mit seinem kegelförmigen in Ansatz 430 im Bereich von Öffnungen 437 der radialen Bohrungen 418. Im verriegelten Zustand werden die Verriegelungselemente 420 in die radialen Bohrungen 418 durch den Zylinder 428 gedrückt. Es sind zahlreiche Ausnehmungen 438 kreisförmig auf der Innenseite 440 der Gehäusehülle 414 vorgesehen, wie auch in der Schnittdarstellung von Fig. 14 zu sehen ist. Das äußerste Verriegelungselement 420a der beiden radialen Bohrungen 418 wird dabei jeweils in eine der inneren Ausnehmungen 438 der Gehäusehülle 414 geschoben. Dadurch wird der Grundkörper 412 mit der zylinderförmigen Gehäusehülle 414 gekoppelt. Sobald sich die Gehäusehülle 414 zur Übertragung eines Drehmoments axial in diesem verriegelten Zustand dreht, wird der zylinderförmige Grundkörper 412 mit bewegt. An dem Grundkörper 412 kann, wie bei den vorherigen Varianten beschrieben, beispielsweise ein - hier nicht dargestellter - Adapter befestigt sein. An diesem Adapter kann zudem beispielsweise ein Kupplungsbereich für Betätigungswerkzeuge vorgesehen sein. Über den Kupplungsbereich kann dann schließlich im verriegelten Zustand ein Drehmoment auf schrauben übertragen werden.

Die Fig. 14 zeigt einen Querschnitt des Drehmomentwerkzeugs 410 im Bereich der radialen Bohrungen 418 gemäß der Fig. 13. Soweit sich die Figuren entsprechen werden auch die gleichen Bezugszeichen verwendet. In den radialen Bohrungen 418 sind die Verriegelungselemente 420 vorgesehen. Die äußeren Verriegelungselemente 420a greifen in die Ausnehmungen 438 der Innenseite 440 der Gehäusehülle 414. Der Zylinder 428 schiebt die Verriegelungselemente 420 vollständig in die radialen Bohrungen 418. Das Drehmomentwerkzeug ist daher verriegelt. Die Gehäusehülle 414 wird zum Übertragen eines Drehmoments angetrieben. Durch die verriegelte Kopplung der Gehäusehülle 414 mit dem Grundkörper 412 dreht sich dieser synchron mit.

Beispielsweise mittels Torsionsstabs bei der Übertragung eines Drehmoments liefert der Dehnungsmessstreifen ein Signal, welches dem aktuellen Drehmoment entspricht, an eine elektronische Erfassungs- und Auswerteeinheit. Die Erfassungs- und Auswerteeinheit wertet das anliegende Drehmoment aus, indem es insbesondere mit dem Solldrehmoment verglichen wird. Bei Erreichen des Solldrehmoments steuert die Erfassungs- und Auswerteeinheit den Hubmagneten 436 zum Auslösen an.

Der Stift 434 des Hubmagneten 436 verschiebt dann gegen die Federkraft der Spiralfeder 426 den Zylinder 428 in dem Kanal 416. Dabei gelangen die Verriegelungselemente 420 auf den verjüngten Teil des kegelförmigen Ansatzes 430, der mit dem Kanal 416 einen Ausweichraum 468 für ein Verriegelungselement bildet. Die Verriegelungselemente 420 rutschen durch die radialen Bohrungen 418 nach, sodass die äußersten Verriegelungselemente 420a die Ausnehmungen 438 der Innenseite 440 der Gehäusehülle 414 verlassen. Dadurch werden die Gehäusehülle 414 und der Grundkörper 412 entkoppelt. Der Grundkörper 412 kann sich nun frei um die Rotationsachse drehen. Zum Verriegeln wird der Stift 434 des Hubmagneten 436 in seine verriegelnde Ausgangsposition zurückgefahren. Der Zylinder 428 schiebt dazu mit der Federkraft der Spiralfeder 426 die Verriegelungselemente 420 in die verriegelnde Position, sodass der Grundkörper 412 wieder mit der Gehäusehülle 414 gekoppelt ist.

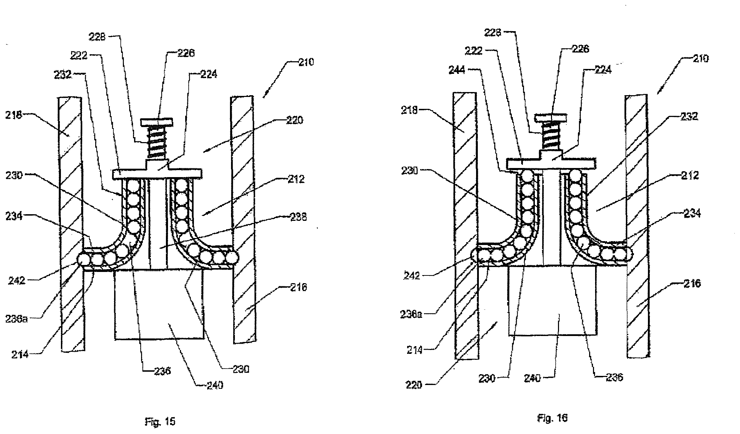

Die Fig. 15 zeigt ein weiteres Ausführungsbeispiel eines erfindungsgemäßen Drehmomentwerkzeugs 210 mit einem Auslösemechanismus 212 in einer Prinzipskizze. Das Drehmomentwerkzeug 210 wird nur als ein schematischer Ausschnitt im Bereich des Auslösemechanismus 212 dargestellt. Dabei ist der Auslösemechanismus 212 mit einem Verriegelungsmechanismus 214 im verriegelten Zustand dargestellt. Mit 216 wird ein Gehäuse des Drehmomentwerkzeugs 210 bezeichnet. Das Gehäuse 216 bildet auch in diesem Ausführungsbeispiel einen Antriebskörper 218 zur Übertragung eines Drehmoments auf einen Grundkörper 220. Der Grundkörper 220 enthält den Verriegelungsmechanismus 214. Dieser Verriegelungsmechanismus 214 umfasst eine flache Abschlussscheibe 222. Die flache Abschlussscheibe 222 umfasst einen stempelartigen Körper 224, an dessen Schaft 226 eine Feder 228 vorgesehen ist, die die Abschlussscheibe 222 in axialer Richtung des Grundkörpers 220 vorspannt.

In der vorliegenden Zeichnung schließt sich unterhalb der Abschlussscheibe 222 jeweils ein gekrümmtes Umlenkrohr 230 an. Dieses gekrümmte Umlenkrohr 230 hat eine 90°-Krümmung, welche von einer axialen Richtung 232 in eine radiale Richtung 234 übergeht. in dem gekrümmten Umlenkrohr 230 befinden sich Verriegelungselemente 236. Bei den Verriegelungselementen 236 handelt es sich um Kugeln.

Ein Stößel 238 eines elektronischen Hubmagneten 240 stößt gegen die Abschlussscheibe 222. In dem verriegelten Zustand des Auslösemechanismus 212 werden die Verriegelungselemente 236 von der Abschlussscheibe 222 mit der Federspannung der Feder 228 in die Umlenkrohre 230 gedrückt. Das äußerste Verriegelungselement 236a wird dabei jeweils in eine Arretierausnehmung 242 zum Verriegeln, wie es in Fig. 15 dargestellt wird, bewegt. In dem verriegelten Zustand rotieren der Antriebskörper 218 und der Grundkörper 220 zum Übertragen eines Drehmoments immer um die gleiche Rotationsachse.

Das Drehmomentwerkzeug 210 ist in dieser Variante elektronisch ausgebildet und verfügt, auch wie die zuvor beschriebenen Ausführungsbeispiele, über eine geeignete Steuerelektronik mit Erfassungs- und Auswertemitteln. Ein Solldrehmoment wird in der Steuerelektronik gespeichert und mit dem jeweils anliegenden Drehmoment verglichen. Dazu wird das anliegende Drehmoment beispielsweise mit einem Dehnungsmessstreifen an einem Torsionsstab erfasst. Die Erfassungs- und Auswertemittel liefern dazu den anliegenden Drehmomentwert an die Steuerelektronik, welche als Signalgeber bei Erreichen des Solldrehmoments den Hubmagneten 240 zum Auslösen des Drehmomentwerkzeugs 210 ansteuert und betätigt.

Die Fig. 16 zeigt das Ausführungsbeispiel gemäß Fig. 15 des erfindungsgemäßen Drehmomentwerkzeugs 210 mit dem Auslösemechanismus 212 in einer Prinzipskizze. Dabei ist der Auslösemechanismus 212 mit dem Verriegelungsmechanismus 214 im entriegelten Zustand dargestellt. Soweit diese Fig. 16 der Fig. 15 entspricht, werden auch die gleichen Bezugszeichen verwendet.

Das Gehäuse 216 bildet den Antriebskörper 218 zur Übertragung eines Drehmoments auf den Grundkörper 220. Der Grundkörper 220 enthält den Verriegelungsmechanismus 214. Dieser Verriegelungsmechanismus 214 umfasst die flache Abschlussscheibe 222. Die Abschlussscheibe 222 ist durch die Feder 228 federbelastet vorgespannt.

Das Stößel 238 des Hubmagneten 240 drückt beim Auslösen des Drehmomentwerkzeugs 210 gegen die Abschlussscheibe 222. In dem hier dargestellten entriegelten Zustand des Auslösemechanismus 212 wird dabei die Abschlussscheibe 222 von den Enden der gekrümmten Umlenkrohre 230 bewegt. Hierdurch entsteht ein Ausweichraum 244, in welchen Verriegelungselemente 236 ausweichen können. Die Arretierausnehmung 242 wird hingegen freigegeben. Dadurch sind der Grundkörper 220 und der Antriebskörper 218 nicht mehr miteinander gekoppelt. Der Antriebskörper 218 kann in diesem ausgelösten und entriegelten Zustand somit kein Drehmoment auf den Grundkörper 220 übertragen. Der Grundkörper 220 kann in dem Gehäuse 216 frei rotieren.

**Bezugszeichenliste**

| | | | |
|---|---|---|---|
| | | 57 | Ende der radialen Bohrung |
| | | 58 | Ausweichraum |
| | | 60 | Spiralfeder |
| 10 | Drehmomentschraubendreher | 62 | Hubmagnet |
| 12 | Grundkörper | 64 | Kammer |
| 14 | Gehäuse | 66 | Stift |
| 16 | Vorderer Bereich des Gehäuses | 68 | Durchgang |
| 18 | Antriebsschaft | 70 | Axiale Endöffnung |
| 20 | Torsionsstab | 72 | Innere Ausnehmung |
| 22 | Dehnungsmessstreifen | 74 | Erfassungs- und Auswertemittel |
| 24 | Ende des Antriebsschafts | | |
| 26 | Aufnahme | 110 | Drehmomentwerkzeug |
| 27 | Verbindungsbereich | 112 | Grundkörper |
| 28 | Ende des Gehäuses | 114 | Gehäusekörper |
| 30 | Adapter | 116 | Vorderer Bereich des |
| 32 | Welle | | Gehäusekörpers |
| 34 | Nadellager | 118 | Antriebsschaft |
| 36 | Endstück der Welle | 120 | Torsionsstab |
| 38 | Scheibe | 122 | Dehnungsmessstreifen |
| 40 | Ende der Welle außerhalb des | 124 | Ende des Antriebsschafts |
| | Gehäuses | 126 | Aufnahme |
| 42 | Sicherungsring | 127 | Verbindungsbereich |
| 44 | Auslösemechanismus | 128 | Ende des Gehäusekörpers |
| 46 | Verriegelungsmechanismus | 130 | Adapter |
| 48 | radiale Bohrung | 132 | Welle |
| 50 | Verriegelungselemente | 134 | Nadellager |
| 52 | Stahlkugeln | 136 | Endstück |
| 52a | äußerste Stahlkugel | 138 | Scheibe |
| 52b | Stahlkugel | 139 | zylinderförmigen Körper |
| 54 | Rotationsachse | 139a | Flache Seite des |
| 56 | axialen Bohrung | | zylinderförmigen Körper |
| 140 | Ende der Welle außerhalb des | 327 | Verbindungsbereich |
| | Gehäusekörpers | 328 | Ende des Gehäuses |
| 142 | Sicherungsring | 330 | Adapter |
| 144 | Auslösemechanismus | 332 | Welle |
| 146 | Verriegelungsmechanismus | 334 | Nadellager |
| 148 | Bohrung | 336 | Endstück der Welle |
| 150 | Verriegelungselemente | 338 | Scheibenabschnitt |
| 152 | Stahlkugeln | 340 | Rotationsachse |
| 152a | Äußerste Stahlkugel | 342 | Herausgeführtes Ende der Welle |
| 152b | Stahlkugel | 343 | Sicherungsring |
| 154 | Rotationsachse | 344 | Auslösemechanismus |
| 156 | Axiale Bohrung | 346 | Verriegelungsmechanismus |
| 157 | Ende der radialen Bohrung | 348 | Radiale Bohrung |
| 158 | Spiralfeder | 350 | Gegenüberliegende Seite |
| 160 | Sperrkörper | 352 | Sperrhebelkammer |
| 162 | Hubmagnet | 354 | hammerförmiger Sperrhebel |
| 164 | Kammer für den Hubmagneten | 356 | Feder |
| 166 | Bolzen | 358 | Verriegelungselemente |
| 168 | Ausweichraum des Sperrkörpers | 360 | Stahlkugeln |
| 172 | Innere Ausnehmung | 360a | Äußerste Stahlkugel |
| 174 | Erfassungs- und Auswertemittel | 360b | Unterste Stahlkugel |
| | | 362 | Innere Ausnehmungen |
| 310 | Drehmomentwerkzeug | 364 | Hubmagnet |
| 312 | Grundkörper | 366 | Innere Kammer |
| 314 | Gehäuse | 368 | Axialer Stift des Hubmagneten |
| 316 | Vorderer Bereich des Gehäuses | 370 | Axiale Durchgang |
| 318 | Antriebsschaft | 374 | Erfassungs- und Auswertemittel |
| 320 | Torsionsstab | 376 | Ausweichraum |
| 322 | Dehnungsmessstreifen | | |
| 324 | Ende des Antriebsschafts | 410 | Drehmomentwerkzeug |
| 326 | Aufnahme | 412 | Zylinderförmiger Grund körper |
| 414 | zylinderförmige Gehäusehülle | 232 | Axialen Richtung |
| 416 | Runder Kanal | 234 | Radiale Richtung |
| 418 | Radiale Bohrungen | 236 | Verriegelungselemente |
| 420 | Verriegelungselemente | 236a | Äußerstes Verriegelungselement |
| 420a | Äußerstes Verriegelungselement | 238 | Stößel |
| 422 | Stahlkugeln | 240 | Hubmagnet |
| 424 | Anschlag | 242 | Arretierausnehmung |
| 426 | Spiralfeder | 244 | Ausweichraum |
| 428 | Zylinder | | |
| 430 | kegelförmiger Ansatz | | |
| 432 | Abgestumpfte Seite | | |
| 434 | Stift des Hubmagneten | | |
| 436 | elektronischer Hubmagnet | | |
| 437 | Öffnungen | | |
| 438 | Ausnehmungen | | |
| 440 | Innenseite der Gehäusehülle | | |
| 444 | Auslösemechanismus | | |
| 446 | Verriegelungsmechanismus | | |
| 468 | Ausweichraum | | |
| | | | |
| 210 | Drehmomentwerkzeug | | |
| 212 | Auslösemechanismus | | |
| 214 | Verriegelungsmechanismus | | |
| 216 | Gehäuse | | |
| 218 | Antriebskörper | | |
| 220 | Grundkörper | | |
| 222 | Abschlussscheibe | | |
| 224 | Stempelartiger Körper | | |
| 226 | Schaft | | |
| 228 | Feder | | |
| 230 | Umlenkrohr | | |

## Patentansprüche

1. Auslösendes Drehmomentwerkzeug (10, 110, 310, 410) zum Anziehen einer Schraube oder dgl., welches bei einem Solldrehmoment auslöst, enthaltend
a) einen Grundkörper (12, 112, 312, 412) mit einem Gehäuse (14, 114, 314, 414), welche um eine gemeinsame Achse zur Übertragung des Drehmoments rotieren,
b) einen Antriebsschaft (18, 118, 218, 318), welcher mit dem Gehäuse (14, 114, 314, 414) zur Übertragung eines Drehmoments fest verbunden ist,
c) einen Verbindungsbereich (27, 127, 327) an dem Antriebsschaft (18, 118, 318) zum Verbinden mit einem Antrieb,
d) einen Adapter (30, 130, 330) für ein Betätigungswerkzeug, welcher an dem Grundkörper (12, 112, 312, 412) vorgesehen ist und gemeinsam mit dem Gehäuse (14, 114, 314, 414) und dem Antriebsschaft (18, 118, 318) zum Übertragen des Drehmoments rotiert,
e) Erfassungs- und Auswertemittel (74, 174, 374) zum Erfassen und Auswerten des übertragenen Drehmoments,
f) einen Auslösemechanismus (44, 144, 344, 444), welcher in dem Gehäuse (14, 114, 314, 414) angeordnet ist und bei Erreichen eines Solldrehmoments auslöst,
g) der Adapter (30, 130, 330) für das Betätigungswerkzeug drehbar in dem Gehäuse (14, 114, 314, 414) gelagert ist, wobei der Auslösemechanismus (44, 144, 344, 444) einen Verriegelungsmechanismus (46, 146, 346, 446) enthält, welcher den Adapter (30, 130, 330) mit dem Gehäuse (14, 114, 314, 414) zur Übertragung des Drehmoments verbindet und beim Auslösen des Auslösemechanismus (44, 144, 344,444) für einen Freilauf in dem Gehäuse (14, 114, 314, 414) entriegelt,
h) der Adapter (30, 130) eine radiale Bohrung (48, 148, 348, 418) mit wenigstens einem Verrieglungselement (50, 150, 358, 420) aufweist, wobei das Verrieglungselement (50, 150, 358, 420) mit Hilfe des elektrisch betriebenen Aktuators (62, 162, 364, 436) zum Verriegeln aus der Bohrung (48, 148, 348, 418) in eine Ausnehmung (72, 172, 438) des Gehäuses (14) geschoben wird und zum Entriegeln sich das Verrieglungselement (50, 150, 358, 420) in einen Ausweichraum (58, 168, 376) bewegt,
**dadurch gekennzeichnet, dass**
i) der Ausweichraum (58) von einer axialen Bohrung (56) in dem Adapter (30) gebildet wird, in welche das Verriegelungselement (50) zum Entriegeln des Verriegelungsmechanismus (46) mittels des elektrisch betriebenen Aktuators (62) mit einem axialen Stift (66) zum Auslösen bewegt wird.

2. Auslösendes Drehmomentwerkzeug (10, 110, 310, 410) zum Anziehen einer Schraube oder dgl., welches bei einem Solldrehmoment auslöst nach Anspruch 1, **dadurch gekennzeichnet, dass** ein elektrisch betriebener Aktuator (62, 162, 364, 436) vorgesehen ist, welcher den Verriegelungsmechanismus (46, 146, 346, 446) bei Erreichen des Solldrehmoments entriegelt.

3. Auslösendes Drehmomentwerkzeug (10, 110, 310, 410) zum Anziehen einer Schraube oder dgl., welches bei einem Solldrehmoment auslöst nach einem der Ansprüche 1 oder 2, **dadurch gekennzeichnet, dass** das Verrieglungselement (50, 150, 358, 420) des Verriegelungsmechanismus (46, 146, 346, 446) zum Verriegeln mit einem Federelement (60, 158, 356, 426) vorgespannt ist.

4. Auslösendes Drehmomentwerkzeug (10, 110, 310, 410) zum Anziehen einer Schraube oder dgl., welches bei einem Solldrehmoment auslöst nach einem der Ansprüche 2 bis 3, **dadurch gekennzeichnet, dass** ein federbelasteter Sperrkörper (160) mit einem Ausweichraum (168) vorgesehen ist, wobei das Verriegelungselement (150) zum Entriegeln des Verriegelungsmechanismus (146) mittels des Hubmagneten (162) in den Ausweichraum (168) bewegt wird und zum Verriegeln der Sperrkörper (160) das Verriegelungselement (150) in die Ausnehmung (172) des Gehäuses (114) schiebt.

5. Auslösendes Drehmomentwerkzeug (10, 110, 310, 410) zum Anziehen einer Schraube oder dgl., welches bei einem Solldrehmoment auslöst nach einem der Ansprüche 2 bis 4, **dadurch gekennzeichnet, dass** der Ausweichraum (376) in einem federbelasteten Sperrhebel (354) vorgesehen ist, welcher das Verriegelungselement (350) zum Entriegeln des Verriegelungsmechanismus (346) mittels des elektrisch betriebenen Aktuators (364) in den Ausweichraum (376) bewegt und zum Verriegeln der Sperrhebel (354) das Verriegelungselement (358) in die Ausnehmung (362) des Gehäuses (314) schiebt.

6. Auslösendes Drehmomentwerkzeug (10, 110, 310, 410) zum Anziehen einer Schraube oder dgl., welches bei einem Solldrehmoment auslöst nach Anspruch 1, **dadurch gekennzeichnet, dass** der Ausweichraum (468) von einem federbelasteten Körper (428) mit einem kegelförmigen Ansatz (430) gebildet wird, welcher in einem axialen Kanal (416) des Grundkörpers (412) angeordnet ist, wobei das Verriegelungselement (420) zum Entriegeln des Verriegelungsmechanismus (446) mittels des elektrisch betriebenen Aktuators (434) in den Ausweichraum (468) bewegt wird und zum Verriegeln der Körper (428) mit dem kegelförmigen Ansatz (430) das Verriegelungselement (420) in die Ausnehmung (438) des Gehäuses (414) schiebt.

7. Auslösendes Drehmomentwerkzeug (10, 110, 310, 410) zum Anziehen einer Schraube oder dgl., welches bei einem Solldrehmoment auslöst nach einem der Ansprüche 1 bis 6, **dadurch gekennzeichnet, dass** das Verriegelungselement (50, 150, 358, 420) des Verriegelungsmechanismus (46, 146, 346, 446) aus einer oder mehreren Kugeln (52, 152, 360, 422) oder Zylinderrollen besteht.

8. Auslösendes Drehmomentwerkzeug (10, 110, 310, 410) zum Anziehen einer Schraube oder dgl., welches bei einem Solldrehmoment auslöst nach einem der Ansprüche 1 bis 7, **dadurch gekennzeichnet, dass** der Antriebsschaft (18, 118, 318) als Torsionsstab (20, 120, 320) ausgebildet ist.

9. Auslösendes Drehmomentwerkzeug (10, 110, 310, 410) zum Anziehen einer Schraube oder dgl., welches bei einem Solldrehmoment auslöst nach einem der Ansprüche 5 bis 8, **dadurch gekennzeichnet, dass** die Erfassungs- und Auswertemittel (74, 174, 374) einen Dehnungsmessstreifen (22, 122, 322) enthalten, welcher an dem Torsionsstab (20, 120, 320) zur Erfassung des Drehmoments vorgesehen ist.

10. Auslösendes Drehmomentwerkzeug (10, 110, 310, 410) zum Anziehen einer Schraube oder dgl., welches bei einem Solldrehmoment auslöst nach einem der Ansprüche 2 bis 9, **dadurch gekennzeichnet, dass** die Erfassungs- und Auswertemittel (74, 174, 374) eine elektronische Steuereinheit aufweisen, welche den elektrisch betriebenen Aktuator (62, 162, 364, 436) des Auslösemechanismus (44, 144, 344, 444) zum Auslösen ansteuern.

11. Auslösendes Drehmomentwerkzeug (10, 110, 310, 410) zum Anziehen einer Schraube oder dgl., welches bei einem Solldrehmoment auslöst nach einem der Ansprüche 1 bis 10, **dadurch gekennzeichnet, dass** ein motorischer Antrieb zur Erzeugung eines Drehmoments vorgesehen ist.

12. Auslösendes Drehmomentwerkzeug (10, 110, 310, 410) zum Anziehen einer Schraube oder dgl., welches bei einem Solldrehmoment auslöst nach einem der Ansprüche 1 bis 11, **dadurch gekennzeichnet, dass** das Verriegelungselement (50, 150, 358, 420) in einem um 90° gekrümmten Umlenkrohr (230) in dem Grundkörper (220) vorgesehen ist, welches von einer axialen Richtung (232) in eine radiale Richtung (234) übergeht.

## Claims

1. A triggering torque tool (10, 110, 310, 410) to tighten a screw or a similar fastener, which triggers at a target torque, comprising
a) a main body (12, 112, 312, 412) with a housing (14, 114, 314, 414), which rotate around a common axis to transfer the torque,
b) a drive shaft (18, 118, 218, 318), which is firmly connected to the housing (14, 114, 314, 414) to transfer a torque,
c) a connection area (27, 127, 327) on the drive shaft (18, 118, 318) to connect to a drive,
d) an adapter (30, 130, 330) for an operating tool, which is provided on the main body (12, 112, 312, 412) and rotates together with the housing (14, 114, 314, 414) and the drive shaft (18, 118, 318) to transfer the torque,
e) measuring and evaluating means (74, 174, 374) to measure and evaluate the torque transferred,
f) a trigger mechanism (44, 144, 344, 444), which is arranged in the housing (14, 114, 314, 414) and which triggers upon reaching a target torque,
g) the adapter (30, 130, 330) for the operating tool, which is pivot-mounted in the housing (14, 114, 314, 414), whereby the trigger mechanism (44, 144, 344, 444) contains a locking mechanism (46, 146, 346, 446), which connects the adapter (30, 130, 330) to the housing (14, 114, 314, 414) to transfer the torque and unlocks when the trigger mechanism (44, 144, 344, 444) is released to allow said adapter to rotate freely in the housing (14, 114, 314, 414),
h) the adapter (30, 130) having a radial hole (48, 148, 348, 418) with at least one a locking element (50, 150, 358,420), whereby the locking element (50, 150,358,420) is pushed out of the hole (48, 148, 348, 418) and into a recess (72, 172, 438) in the housing (14) with the aid of the electrically operated actuator (62, 162, 364, 436) to lock and whereby the locking element (50, 150, 358, 420) moves in a free space (58, 168, 376) to unlock,
**characterized in that**
i) the free space (58) is formed by an axial hole (56) in the adapter (30), into which the locking element (50) is moved by means of the electrically operated actuator (62) with an axial pin (66) to unlock the locking mechanism (46).

2. A triggering torque tool (10, 110, 310, 410) to tighten a screw or a similar fastener, which triggers at a target torque, according to Claim 1, **characterized in that** an electrically operated actuator (62,162,364,436) is provided, which unlocks the locking mechanism (46, 146, 346, 446) upon reaching the target torque.

3. A triggering torque tool (10, 110, 310, 410) to tighten a screw or a similar fastener, which triggers at a target torque, according to one of Claims 1 or 2, **characterized in that** the locking element (50, 150, 358, 420) of the locking mechanism (46, 146, 346, 446) is preloaded by a spring element (60, 158, 356, 426) to lock.

4. A triggering torque tool (10, 110, 310, 410) to tighten a screw or a similar fastener, which triggers at a target torque, according to one of Claims 2 to 3, **characterized in that** a spring-loaded locking body (160) is provided with a free space (168), whereby the locking element (150) is moved into the free space (168) by means of the solenoid (162), to unlock the locking mechanism (146), and whereby the locking body (160) pushes the locking element (150) Into the recess (172) of the housing (114) to lock.

5. A triggering torque tool (10, 110, 310, 410) to tighten a screw or a similar fastener, which triggers at a target torque, according to one of Claims 2 to 4, **characterized in that** the free space (376) is provided in a spring-loaded locking lever (354), which moves the locking element (350) into the free space (376) by means of the electrically operated actuator (364), to unlock the locking mechanism (346), and whereby the locking lever (354) pushes the locking element (358) into the recess (362) of the housing (314) to lock the locking mechanism (346).

6. A triggering torque tool (10, 110, 310, 410) to tighten a screw or a similar fastener, which triggers at a target torque, according to Claim 1, **characterized in that** the free space (468) is formed a spring-loaded body (428) with a conical tip (430), which is arranged in an axial channel (416) of the main body (412), whereby the locking element (420) is moved into the free space (468) by means of the electrically operated actuator (434) to unlock the locking mechanism (446), and whereby the body (428) with the conical tip (430) pushes the locking element (420) into the recess (438) of the housing (414) to lock.

7. A triggering torque tool (10, 110, 310, 410) to tighten a screw or a similar fastener, which triggers at a target torque, according to one of Claims 1 to 6, **characterized in that** the locking element (50, 150, 358, 420) of the locking mechanism (46, 146, 346, 446) comprises one or more balls (52, 152, 360, 422) or cylindrical rollers.

8. A triggering torque tool (10, 110, 310, 410) to tighten a screw or a similar fastener, which triggers at a target torque, according to one of Claims 1 to 7, **characterized in that** the drive shaft (18, 118, 318) is formed as a torsion bar (20, 120, 320).

9. A triggering torque tool (10, 110, 310, 410) to tighten a screw or a similar fastener, which triggers at a target torque, according to one of Claims 5 to 8, **characterized in that** the measuring and evaluating means (74, 174, 374) comprises a strain gauge (22, 122, 322), which is provided on the torsion bar (20, 120, 320) to measure the torque.

10. A triggering torque tool (10, 110, 310, 410) to tighten a screw or a similar fastener, which triggers at a target torque, according to one of Claims 2 to 9, **characterized in that** the measuring and evaluating means (74, 174, 374) has an electronic control unit, which drives the electrically operated actuator (62, 162, 364, 436) of the trigger mechanism (44, 144, 344, 444) to trigger.

11. A triggering torque tool (10, 110, 310, 410) to tighten a screw or a similar fastener, which triggers at a target torque, according to one of Claims 1 to 10, **characterized in that** a motor drive is provided to generate a torque.

12. A triggering torque tool (10, 110, 310, 410) to tighten a screw or a similar fastener, which triggers at a target torque, according to one of Claims 1 to 11, **characterized In that** the locking element (50, 150, 358, 420) is provided in a deflection tube (230), which is curved at an angle of 90° in the main body (220) and which transitions from an axial direction (232) to a radial direction (234).

## Revendications

1. Outil de couple à déclenchement (10, 110, 310, 410) destiné à serrer une vis ou pièce similaire qui se déclenche une fois un couple de consigne atteint, comprenant :
(a) un corps de base (12, 112, 312, 412) muni d'un boîtier (14, 114, 314, 414) qui tournent autour d'un axe commun afin de transmettre le couple,
(b) une tige d'entraînement (18, 118, 218, 318) solidaire du boîtier (14, 114, 314, 414) afin de transmettre un couple,
(c) une zone de connexion (27, 127, 327) située sur la tige d'entraînement (18, 118, 318) afin d'être reliée à un dispositif d'entraînement,
(d) un adaptateur (30, 130, 330) pour un outil d'actionnement qui est prévu sur le corps de base (12, 112, 312, 412) et qui tourne conjointement avec le boîtier (14, 114, 314, 414) et la tige d'entraînement (18, 118, 318) afin de transmettre le couple,
(e) des moyens de saisie et d'évaluation (74, 174, 374) destinés à saisir et à évaluer le couple transmis,
(f) un mécanisme de déclenchement (44, 144, 344, 444) qui est disposé dans le boîtier (14, 114, 314, 414) et se déclenche une fois un couple de consigne atteint,
(g) l'adaptateur (30, 130, 330) pour l'outil d'actionnement est logé de manière à tourner dans le boîtier (14, 114, 314, 414), le mécanisme de déclenchement (44, 144, 344, 444) comprenant un mécanisme de verrouillage (46, 146, 346, 446) qui relie l'adaptateur (30, 130, 330) au boîtier (14, 114, 314, 414) afin de transmettre le couple et le déverrouille pour une course libre dans le boîtier (14, 114-, 314, 414) lorsque le mécanisme de déclenchement (44, 144, 344, 444) se déclenche,
(h) l'adaptateur (30, 130) présente un perçage radial (48, 148, 348, 418) muni d'au moins un élément de verrouillage (50, 150, 358, 420), l'élément de verrouillage (50, 150, 358, 420) étant poussé à l'aide de l'actionneur à actionnement électrique (62, 162, 364, 436) hors du perçage (48, 148, 348, 418) dans un creux (72, 172, 438) du boîtier (14) en vue du verrouillage et l'élément de verrouillage (50, 150, 358, 420) se déplaçant dans un espace de dégagement (58, 168, 376) en vue du déverrouillage ,
**caractérisé en ce que**
(i) l'espace de dégagement (58) est formé dans l'adaptateur (30) par un perçage radial (56) dans lequel l'élément de verrouillage (50) est déplacé en vue du déverrouillage du mécanisme de verrouillage (46) au moyen de l'actionneur à actionnement électrique (62) avec une tige axiale (66) en vue du déclenchement.

2. Outil de couple à déclenchement (10, 110, 310, 410) destiné à serrer une vis ou pièce similaire qui se déclenche une fois un couple de consigne atteint, selon la revendication 1, **caractérisé en ce qu'**il est prévu un actionneur à actionnement électrique (62, 162, 364, 436) qui déverrouille le mécanisme de verrouillage (46, 146, 346, 446) une fois le couple de consigne atteint.

3. Outil de couple à déclenchement (10, 110, 310, 410) destiné à serrer une vis ou pièce similaire qui se déclenche une fois un couple de consigne atteint, selon l'une quelconque des revendications 1 ou 2, **caractérisé en ce que** l'élément de verrouillage (50, 150, 358, 420) du mécanisme de verrouillage (46, 146, 346, 446) est prétendu à l'aide d'un élément à ressort (60, 158, 356, 426) en vue du verrouillage.

4. Outil de couple à déclenchement (10, 110, 310, 410) destiné à serrer une vis ou pièce similaire qui se déclenche une fois un couple de consigne atteint, selon l'une quelconque des revendications 2 à 3, **caractérisé en ce qu'**il est prévu un corps d'arrêt (160) à ressort muni d'un espace de dégagement (168), l'élément de verrouillage (150) étant déplacé dans l'espace de dégagement (168) au moyen de l'électro-aimant de levage (162) afin de déverrouiller le mécanisme de verrouillage (146) et pousse l'élément de verrouillage (150) dans le creux (172) du boîtier (114) afin de verrouiller les corps d'arrêt (160).

5. Outil de couple à déclenchement (10, 110, 310, 410) destiné à serrer une vis ou pièce similaire qui se déclenche une fois un couple de consigne atteint, selon l'une quelconque des revendications 2 à 4, **caractérisé en ce que** l'espace de dégagement (376) est prévu dans un levier d'arrêt (354) à ressort qui déplace l'élément de verrouillage (350) au moyen de l'actionneur à actionnement électrique (364) dans l'espace de dégagement (376) afin de déverrouiller le mécanisme de verrouillage (346) et pousse l'élément de verrouillage (358) dans le creux (362) du boîtier (314) afin de verrouiller les leviers d'arrêt (354).

6. Outil de couple à déclenchement (10, 110, 310, 410) destiné à serrer une vis ou pièce similaire qui se déclenche une fois un couple de consigne atteint, selon la revendication 1, **caractérisé en ce que** l'espace de dégagement (468) est formé par un corps à ressort (428) muni d'un épaulement conique (430) qui est disposé dans un canal axial (416) du corps de base (412), l'élément de verrouillage (420) étant déplacé dans l'espace de dégagement (468) au moyen de l'actionneur à actionnement électrique (434) afin de déverrouiller le mécanisme de verrouillage (446) et pousse l'élément de verrouillage (420) dans le creux (438) du boîtier (414) afin de verrouiller les corps (428) muni de l'épaulement conique (430).

7. Outil de couple à déclenchement (10, 110, 310, 410) destiné à serrer une vis ou pièce similaire qui se déclenche une fois un couple de consigne atteint, selon l'une quelconque des revendications 1 à 6, **caractérisé en ce que** l'élément de verrouillage (50, 150, 358, 420) du mécanisme de verrouillage (46, 146, 346, 446) se compose d'une ou de plusieurs billes (52, 152, 360, 422) ou de rouleaux cylindriques.

8. Outil de couple à déclenchement (10, 110, 310, 410) destiné à serrer une vis ou pièce similaire qui se déclenche une fois un couple de consigne atteint, selon l'une quelconque des revendications 1 à 7, **caractérisé en ce que** la tige d'entraînement (18, 118, 318) est configurée sous forme de barre de torsion (20, 120, 320).

9. Outil de couple à déclenchement (10, 110, 310, 410) destiné à serrer une vis ou pièce similaire qui se déclenche une fois un couple de consigne atteint, selon l'une quelconque des revendications 5 à 8, **caractérisé en ce que** les moyens de saisie et d'évaluation (74, 174, 374) comprennent une jauge de déformation (22, 122, 322) qui est prévue sur la barre de torsion (20, 120, 320) afin de saisir le couple.

10. Outil de couple à déclenchement (10, 110, 310, 410) destiné à serrer une vis ou pièce similaire qui se déclenche une fois un couple de consigne atteint, selon l'une quelconque des revendications 2 à 9, **caractérisé en ce que** les moyens de saisie et d'évaluation (74, 174, 374) présentent une unité de commande électronique qui commande l'actionneur à actionnement électrique (62, 162, 364, 436) du mécanisme de déclenchement (44, 144, 344, 444) en vue du déclenchement.

11. Outil de couple à déclenchement (10, 110, 310, 410) destiné à serrer une vis ou pièce similaire qui se déclenche une fois un couple de consigne atteint, selon l'une quelconque des revendications 1 à 10, **caractérisé en ce que,** pour la génération d' un couple, il est prévu un dispositif d'entraînement à moteur.

12. Outil de couple à déclenchement (10, 110, 310, 410) destiné à serrer une vis ou pièce similaire qui se déclenche une fois un couple de consigne atteint, selon l'une quelconque des revendications 1 à 11, **caractérisé en ce que** l'élément de verrouillage (50, 150, 358, 420) est prévu dans le corps de base (220) dans un tube de déviation (230) cintré de 90° qui passe d'un sens axial (232) à un sens radial (234).
